# EUROPEAN PATENT SPECIFICATION

(11) **EP 3 754 306 B1**
(45) Date of publication and mention of the grant of the patent: **05.07.2023**
(21) Application number: 20178159.8
(22) Date of filing: 04.06.2020
(51) Int. Cl.: G01F 3/22, G01F 15/04

(54) **A CRANK MECHANISM FOR A GAS METER WITH THE COMPENSATION OF TEMPERATURE**
KURBELANORDNUNG FÜR EINEN GASZÄHLER MIT TEMPERATURKOMPENSIERUNG
MÉCANISME À MANIVELLE DE COMPTEUR DE GAZ AVEC COMPENSATION DE TEMPERATURE

(30) Priority: 17.06.2019 PL 43026219
(43) Date of publication of application: 23.12.2020
(73) Proprietor: Apator Metrix Spolka Akcyjna, 83-110 Tczew (PL)
(72) Inventor: Spierewka, Slawomir, 83-115 Zabagno (PL)
(74) Representative: Wroblewski, Marcin Jan

(56) References cited:
- EP-A1- 0 134 939
- EP-A1- 0 245 914
- WO-A1-2009/148339
- CN-U- 201 697 670
- CN-U- 207 248 272
- US-A- 3 362 223
- US-B1- 6 378 366

## Description

### Field of the invention

The object of the invention is a crank mechanism for a gas meter, in particular for a bellows meter, enabling the compensation of temperature. This mechanism is used to transfer propulsion from the bellows to the counting device of the gas meter.

### Background of the invention

From patent description PL 196156 and patent description US6378366B1 there is a known solution of a gas meter having a crank mechanism, which comprises a rotary part around an axis, at least one crank element which is connected to the rotary part in a manner providing rotation, at least one swivel arm, which is swingingly connected to the crank element, at least one movement-receiving gripping element which is connected to the swivel arm, and a compensating element in the form of a bimetal helix, dependent on the temperature, which defines the angular position of the swivel arm. Depending on the temperature, the error curve of the meter can be optimised by proper radial and tangential adjustments of a sensor element (stroke and linear motion), caused by the compensating element and defined by proper design of a recess.

From patent description PL 210347 there is a known solution of a crank mechanism for a gas meter, which comprises a rotary part, whose axis is also the axis of rotation for a crank disc, and at least one crank element connected to temperature-dependent compensating elements. It is characterised in that the crank element is coupled directly to the second compensating element, as well as indirectly to the first compensating element via a slide. The crank element is fixed in a permanent manner to the free end of the second compensating element. The second compensating element is fixedly mounted in the slide. The crank mechanism has a slide which is guided in a straight line in the crank disc. The slide is connected in an articulated manner to the deformable arm of the first compensating element, while the first compensating element is mounted in a non-rotary manner in the crank disc. The first compensating element has a deformable arm which has a limited ability to move in temperatures lower than the base values, due to the resistance part mounted in the crank disc. The compensating elements, the first element and the second element, are bimetallic strips with shapes resembling an incomplete letter "U".

Chinese utility model CN201697670U relates to a diaphragm gas meter driven by a cam fork and with a built-in mechanical temperature conversion device, which comprises a shell body and a cassette mechanism group, wherein the cam group of the cassette mechanism group also comprises a compensator, a compensator seat, a movable tension rod column, a pointer and a crank disk; the top surface of a cam and the crank disk are in rigid connection through the pointer, and the crank disk is provided with the compensator, the compensator seat and the mobile movable tension rod column; one end of the spiral center of the compensator is fixed on the crank disk through the compensator seat, and the external extension linear end thereof is directly inserted in a gap in the middle part of the movable tension rod column; a round shaft at the lower part of the movable tension rod column is clamped in the arc-shaped groove of the crank disk, and the upper part of the movable tension rod column is connected with a swing arm through a tension rod; and the compensator expands with the temperature changes, the liner end thereof deviates from inside to outside, the movable tension rod column is directly poked to move inwards and outwards along the arc-shaped groove so as to change the replicating motion distance of a diaphragm group through the tension rod, and realize the compensation of temperature.

European patent application EP0245914A1 discloses a diaphragm gas meter tangent assembly which rotates about an axis to drive the meter valves and includes a tangent wrist connected to the meter flag assembly, a temperature compensating assembly for varying the radius of movement of said tangent wrist from said axis in accordance with variations in the temperature of the metered gas, comprising a first bimetal element having a first end connected to said tangent assembly to rotate with said tangent assembly around said axis; and a second bimetal element having a first end connected to said first bimetal element second end and a second end connected to said tangent wrist; said first and second bimetal elements being reversed with respect to each other and so configured that the path of movement of said tangent wrist with respect to said axis in response to temperature variations is along a nonlinear curve so as to maintain the valve timing substantially without change as said radius changes.

Furthermore, a patent application WO2009148339A1 reveals a crank mechanism of a gas meter with temperature compensation, particularly a bellows gas meter, containing a rotating part whose axis is at the same time the axis of rotation of the crank disc and at least one crank element connected with the temperature - dependent compensation elements, wherein the crank element is directly coupled with the compensation element and also indirectly, through slide, coupled with the compensation element. The crank element is fixed at the free end of the compensation element, which in turn is fixed in the slide. Slide has a straight-line guide in the crank disc and an articulated joint connection with the inclining arm of the compensation element. The compensation element is fixed in a non-rotational manner in the crank disc and has an inclining arm with a limited displacement capability for temperatures lower than the basic temperature due to a stop element fixed in the crank disc. Both compensation elements are 'U'-shaped thermal bi metals.

In the presented invention, the compensating elements substantially enable radial adjustment of the crank element. Radial offset of the crank element changes the stroke of the membrane, which causes the error curve to move up or down in relation to the zero line. A particularly advantageous feature involves the adjustment of the crank element by two compensating elements acting independently of one another, in which one moves the crank element in a radial direction by acting according to its temperature characteristics, while the other one assists the first one by moving the slide of the crank element and thus the crank element itself in a radial direction.

There are also other known propulsions which transfer the movement of membranes via the crank element to the counting unit. Generally, in these cases the arm of the rotary joint which is connected to the compensating element moves radially to the axis of the rotary part, causing a change in the stroke of the membrane, and thus a change in the measured unit volume.

Such mechanisms are used to eliminate the impact of a change in gas temperature on the volume reading of the calculating element. This impact is very significant, since a change in gas temperature by 3K corresponds to a change in volume of approximately 1%. Such significant changes in gas temperature occur particularly when the meter is placed outside a building. Therefore, this meter operates in various temperatures depending on the season of the year.

Therefore, the crank mechanism adjusts the volume of gas which may pass through the meter to the temperature of the outside.

The purpose of the invention is to provide such a crank mechanism which would successfully compensate the temperature dependence of gas meters by properly adjusting the crank element to specific temperature dependence.

### The essence of the invention

The essence of the invention is a crank mechanism for a gas meter with mechanical compensation of temperature, in particular for a bellows meter, comprising a rotary part, whose axis is the axis of rotation for a crank disc seated thereon, and a crank element configured to convert the reciprocating motion of the gas meter membrane into a rotary motion via levers, said crank element is connected to the crank disc via a rigid crank, seated rotatably on the crank disc via a rotary element, and wherein one end of said rigid crank is connected to a temperature-dependent compensating element and the other one is directly connected to crank element (3), characterised in that the rigid crank constitutes a support for the crank element and has a pair of arms, the arm connected to the crank element being longer than the arm connected to the compensating element.

Preferably, the crank mechanism for a gas meter according to the invention is characterised in that the arm connected to the crank element is approximately two times longer than the arm connected to the compensating element.

Selecting the length of the rigid crank arms of the crank mechanism in such a way that the arm connected to the crank element is longer than the arm connected to the compensating element causes enhancement of the operation of the compensating element. This effect is particularly preferable when the arm connected to the crank element is approximately two times longer than the arm connected to the compensating element.

In addition, the operation of the compensating element may be enhanced by proper positioning of the pivot point of the crank, which decides about the magnitude of radial offset, as well as the tangential crank element.

Such possibility of the design of the crank and its position on the crank disc provides a wide ability of adjustment to various types of gas meters, with various temperature ranges, as well as the adjustment to the varying shape and material of the bimetallic strip as a compensating element of the gas meter mechanism.

Preferably, the compensating element of the crank mechanism for a gas meter according to the invention constitutes a strip consisting of at least two mutually combined types of alloys with greatly differing thermal expansion coefficients, in particular a bimetallic strip.

Preferably, the compensating element has a shape resembling a circle.

Also preferably, one side of the compensating element of the crank mechanism for a gas meter according to the invention is attached to a handle fixed in a non-rotary manner to the crank disc, while the second end of the compensating element constitutes a free deformable arm.

Preferably, the compensating element is attached to the handle in such a manner that the alloy with a lower thermal expansion coefficient would be located at the side of the rotary part of the crank disc.

Preferably, one side of the shorter arm of the rigid crank ends with resistance profiles, to which the free deformable arm of the compensating element is slidably connected.

Preferably, on the crank disc of the crank mechanism for a gas meter according to invention, there is a resistance part placed tangentially to the compensating element, limiting the movement of the compensating element for temperatures below the base temperature. This results from the fact that the compensating element does not operate with the same deformation in positive and negative temperatures.

Preferably, the crank element directly connected to the rigid crank in the crank mechanism for a gas meter according to the invention moves tangentially to the rotation of the crank disc, and the direction of this movement follows the direction of rotation of the crank disc in the case of temperatures "T-" lower than the base temperature, and an opposite direction in the case of "T+" higher than the base temperature.

The crank mechanism for a gas meter with the compensation of temperature, in particular for a bellows meter according to the invention, comprises a rotary part, whose axis is explicitly the axis of rotation for the crank disc, one rigid crank connected to a temperature-dependent compensating element. The crank element is directly connected to a rigid crank, which follows changes in the temperature of gas surrounding the crank mechanism.

In the presented invention, the compensating element substantially enables adjustment of the crank element both radially (K) and tangentially (w). The radial offset (K) of the crank element by a vector (zk) changes the stroke of the membrane, which causes the error curve to move up or down in relation to the zero line, while the tangential offset (w) changes the duration of filling and emptying of the membrane, which also affects the movement of the error curve depending on the desired temperature correction. A particularly preferable feature involves the fact that the position of the axis of rotation of the crank is situated in such a manner that the direction of tangential offset of the crank element is correlated with the direction of rotations of the crank mechanism for a gas meter and the proper operating direction of the compensating element.

### Description of the drawings

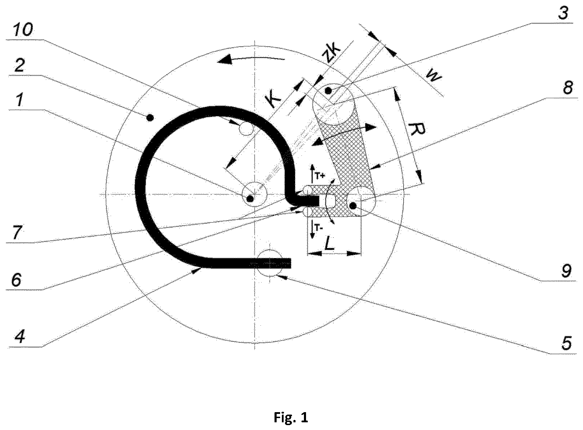

An embodiment of the object of the invention is presented in a drawing, wherein fig. 1 presents a schematic sketch of a crank mechanism according to the invention used in a gas meter with mechanical compensation of temperature.

### Description of the invention

The crank mechanism according to the invention comprises a rotary part 1, on which a crank disc 2 is seated, both elements being placed coaxially. A crank element 3, which in the present case is intended to convert the reciprocating motion of the gas meter membrane into a rotary motion via levers, is placed on the crank disc 2 by means of intermediate elements.

The crank element 3 is connected directly to a rigid crank 8, which is seated rotatably on the crank disc 2 via a rotary element 9. The crank 8 constitutes a support for the crank element 3. Moreover, a compensating element 4, which in this case constitutes a bimetallic strip consisting of at least two mutually combined types of alloys with greatly differing thermal expansion coefficients, with a shape resembling a circle, is attached to the crank disc 2. The shape of the compensating element is adjusted so as to enable proper tilting, dependent on the temperature. One side of the compensating element 4 is attached to a handle 5 fixed in a non-rotary manner to the crank disc 2, while the second end of the compensating element 4 constitutes a free deformable arm 6.

The rigid crank 8 has a pair of arms, among which the arm R connected to the crank element 3 is longer than the arm L connected to the compensating element 4. The arm R connected to the crank element 3 may be about two times longer than the arm L connected to the compensating element 4. Selecting the length of the rigid crank arms of the crank mechanism in such a way that the arm R connected to the crank element is longer than the arm L connected to the compensating element causes enhancement of the operation of the compensating element.

Moreover, the shorter arm L of the rigid crank 8 comprises resistance profiles 7, to which the free deformable arm 6 of the compensating element 4 is slidably connected.

What matters for the proposed solution is that the compensating element 4 requires the introduction of certain mobility limitations. This results from the disproportional tilting of the deformable arm 6 of the compensating element 4, equally in the positive "T+" and negative "T-" directions of the impact of temperature on said compensating element 4 having the form of a bimetallic strip. On the crank disc 2 there is a resistance part 10 situated tangentially to the compensating element 4, which effectively limits the movement of the deformable arm 6 of the compensating element 4 in the operating direction of the bimetallic strip as a result of temperatures "T-" lower than the base temperature.

The compensation method in a gas meter involves the fact that the meter has a crank mechanism used to accomplish compensation. The crank mechanism comprises a crank disc 2 which rotates using the axis of rotation 1. The compensating element 4 is attached by its first end to the crank disc 2. The second free end of the compensating element 4 constitutes a deformable arm 6, which arm is placed between two resistance profiles 7 of the rigid crank 8 seated rotatably in the crank disc 2 via the rotary element 9. Due to a change in temperature, the deformable arm 6 bends in the direction of "T+", i.e. for temperatures higher than the base temperature, or in the direction of "T-" for those lower than the base temperature, starting the rotary movement of the crank 8 by engaging the resistance profiles 7. As a result, the crank 8 follows changes in the temperature of gas surrounding the crank mechanism. The deformable arm 6 bends unobstructed in a direction opposite to the resistance part 10, while being constrained in the opposite direction by the resistance part 10. By performing a rotary movement, the rigid crank 8 changes the position of the crank element 3. To sum up, due to temperature, the crank element 3 changes its position relative to the rotary part 1 of the crank disc 2. Due to the proper transmission ratio (the R/L relation) of the rigid crank 8, this motion is enhanced relative to the movement of the deformable arm 6 of the compensating element 4. In addition, due to proper positioning of the rotary element 9 on the crank disc 2, a change in the position of the crank 8 and thus the crank element 3 occurs both in a radial "zk" and a tangential direction "w" relative to the rotary part 1 of the crank disc 2. The radial offset (K) of the crank element by a vector (zk) changes the stroke of the membrane, which causes the error curve to move up or down in relation to the zero line, while the tangential offset (w) changes the duration of filling and emptying of the membrane, which also affects the movement of the error curve depending on the desired temperature correction.

## Claims

1. A crank mechanism for a gas meter with mechanical compensation of temperature, in particular for a bellows meter, comprising a rotary part (1), whose axis is the axis of rotation for a crank disc (2) seated thereon, a crank element (3) configured to convert the reciprocating motion of the gas meter membrane into a rotary motion via levers, said crank element (3) is connected to the crank disc (2) via a rigid crank (8) seated rotatably on the crank disc (2) via a rotary element (9), and wherein one end of said rigid crank (8) is connected to a temperature-dependent compensating element (4) and the other one is directly connected to crank element (3), **characterised in that** the rigid crank (8) constitutes a support for the crank element (3) and has a pair of arms (R, L), wherein the arm (R) connected to the crank element (3) being longer than the arm (L) connected to the compensating element (4).

2. The crank mechanism for a gas meter according to claim 1, **characterised in that** the arm (R) connected to the crank element (3) is about two times longer than the arm (L) connected to the compensating element (4).

3. The crank mechanism for a gas meter according to any of the preceding claims, **characterised in that** the compensating element (4) constitutes a strip consisting of at least two mutually combined types of alloys with greatly differing thermal expansion coefficients, in particular a bimetallic strip.

4. The crank mechanism for a gas meter according to any of the preceding claims, **characterised in that** the compensating element (4) has a shape resembling a circle.

5. The crank mechanism for a gas meter according to any of the preceding claims, **characterised in that** one side of the compensating element (4) is attached to a handle (5) fixed in a non-rotary manner to the crank disc (2), while the second end of the compensating element (4) constitutes a free deformable arm (6).

6. The crank mechanism for a gas meter according to claim 5, **characterised in that** the compensating element (4) is attached to the handle (5) in such a manner that the alloy with a lower thermal expansion coefficient would be located at the side of the rotary part (1) of the crank disc (2).

7. The crank mechanism for a gas meter according to any of the preceding claims, **characterised in that** one end of the shorter arm of the rigid crank (8) ends with resistance profiles (7), to which the free deformable arm (6) of the compensating element (4) is slidably connected.

8. The crank mechanism for a gas meter according to any of the preceding claims, **characterised in that** on the crank disc (2) there is a resistance part (10) placed tangentially to the compensating element (4), limiting the movement of the compensating element (4) for temperatures below the base temperature.

9. The crank mechanism for a gas meter according to any of the preceding claims, **characterised in that** the crank element (3) directly connected to the rigid crank (8) moves tangentially to the rotation of the crank disc (2) and the direction of this movement follows the direction of rotation of the crank disc (2) in the case of temperatures "T-" lower than the base temperature, and in an opposite direction in the case of "T+" higher than the base temperature.

## Patentansprüche

1. Kurbeltrieb für einen Gaszähler mit mechanischem Temperaturausgleich, insbesondere für einen Balgenzähler, mit einem Drehteil (1), dessen Achse die Drehachse für eine darauf sitzende Kurbelscheibe (2) ist, einem Kurbelelement (3), der so konfiguriert ist, dass er die Hin- und Herbewegung der Gaszählermembran über einen Hebel in eine Drehbewegung umsetzt, wobei das Kurbelelement (3) über eine starre Kurbel (8), die über ein Drehelement (9) drehbar auf der Kurbelscheibe (2) sitzt, mit der Kurbelscheibe (2) verbunden ist, und wobei ein Ende der starren Kurbel (8) mit einem temperaturabhängigen Ausgleichselement (4) und das andere Ende direkt mit dem Kurbelelement (3) verbunden ist, **dadurch gekennzeichnet, dass** die starre Kurbel (8) eine Stütze für das Kurbelelement (3) bildet und ein Paar Arme (R, L) aufweist, wobei der mit dem Kurbelelement (3) verbundene Arm (R) länger ist als der mit dem Ausgleichselement (4) verbundene Arm (L).

2. Kurbeltrieb für einen Gaszähler nach Anspruch 1, **dadurch gekennzeichnet, dass** der mit dem Kurbelelement (3) verbundene Arm (R) etwa zweimal so lang ist wie der mit dem Ausgleichselement (4) verbundene Arm (L).

3. Kurbeltrieb für einen Gaszähler nach einem der vorhergehenden Ansprüche, **dadurch gekennzeichnet, dass** das Ausgleichselement (4) ein Band aus mindestens zwei miteinander kombinierten Legierungsarten mit stark unterschiedlichen Wärmeausdehnungskoeffizienten, insbesondere ein Bimetall-Band, darstellt.

4. Kurbeltrieb für einen Gaszähler nach einem der vorhergehenden Ansprüche, **dadurch gekennzeichnet, dass** das Ausgleichselement (4) eine kreisähnliche Form aufweist.

5. Kurbeltrieb für einen Gaszähler nach einem der vorhergehenden Ansprüche, **dadurch gekennzeichnet, dass** das Ausgleichselement (4) mit einer Seite an einem drehfest an der Kurbelscheibe (2) befestigten Griff (5) angebracht ist, während das zweite Ende des Ausgleichselements (4) einen frei verformbaren Arm (6) bildet.

6. Kurbeltrieb für einen Gaszähler nach Anspruch 5, **dadurch gekennzeichnet, dass** das Ausgleichselements (4) so an dem Griff (5) befestigt ist, dass die Legierung mit dem geringeren Wärmeausdehnungskoeffizienten auf der Seite des drehbaren Teils (1) der Kurbelscheibe (2) angeordnet ist.

7. Kurbeltrieb für einen Gaszähler nach einem der vorhergehenden Ansprüche, **dadurch gekennzeichnet, dass** ein Ende des kürzeren Armes der starren Kurbel (8) mit Widerstandsprofilen (7) endet, mit denen der freie, verformbare Arm (6) des Ausgleichselementes (4) gleitend verbunden ist.

8. Kurbeltrieb für einen Gaszähler nach einem der vorhergehenden Ansprüche, **dadurch gekennzeichnet, dass** an der Kurbelscheibe (2) ein tangential zum Ausgleichselement (4) angeordnetes Widerstandsteil (10) vorhanden ist, das die Bewegung des Ausgleichselements (4) für Temperaturen unterhalb der Grundtemperatur begrenzt.

9. Kurbeltrieb für einen Gaszähler nach einem der vorhergehenden Ansprüche, **dadurch gekennzeichnet, dass** sich das direkt mit der starren Kurbel (8) verbundene Kurbelelement (3) tangential zur Drehung der Kurbelscheibe (2) bewegt und die Richtung dieser Bewegung bei Temperaturen "T⁻" unterhalb der Grundtemperatur der Drehrichtung der Kurbelscheibe (2) folgt und bei "T⁺" oberhalb der Grundtemperatur der entgegengesetzter Richtung.

## Revendications

1. Mécanisme à manivelle pour un compteur de gaz à compensation mécanique de température, en particulier pour un compteur à soufflet, comprenant une partie rotative (1) dont l'axe est l'axe de rotation d'un disque de manivelle (2) qui y est monté, un élément de manivelle (3) configuré pour convertir le mouvement alternatif de la membrane du compteur de gaz en un mouvement rotatif par l'intermédiaire de leviers, ledit élément de manivelle (3) est relié au disque de manivelle (2) par l'intermédiaire d'une manivelle rigide (8) montée de manière rotative sur le disque de manivelle (2) par l'intermédiaire d'un élément rotatif (9), et dans lequel une extrémité de ladite manivelle rigide (8) est reliée à un élément de compensation en fonction de la température (4) et l'autre est directement reliée à l'élément de manivelle (3), **caractérisé en ce que** la manivelle rigide (8) constitue un support pour l'élément de manivelle (3) et a une paire de bras (R, L), le bras (R) relié à l'élément de manivelle (3) étant plus long que le bras (L) relié à l'élément de compensation (4).

2. Mécanisme à manivelle pour un compteur de gaz selon la revendication 1, **caractérisé en ce que** le bras (R) relié à l'élément de manivelle (3) est environ deux fois plus long que le bras (L) relié à l'élément de compensation (4).

3. Mécanisme à manivelle pour un compteur de gaz selon l'une quelconque des revendications précédentes, **caractérisé en ce que** l'élément de compensation (4) constitue une bande constituée d'au moins deux types d'alliages combinés mutuellement et présentant des coefficients de dilatation thermique très différents, en particulier une bande bimétallique.

4. Mécanisme à manivelle pour un compteur de gaz selon l'une quelconque des revendications précédentes, **caractérisé en ce que** l'élément de compensation (4) a une forme ressemblant à un cercle.

5. Mécanisme à manivelle pour un compteur de gaz selon l'une quelconque des revendications précédentes, **caractérisé en ce qu'**un côté de l'élément de compensation (4) est attaché à une poignée (5) fixée de manière non rotative au disque de manivelle (2), tandis que la seconde extrémité de l'élément de compensation (4) constitue un bras libre déformable (6).

6. Mécanisme à manivelle pour un compteur de gaz selon la revendication 5, **caractérisé en ce que** l'élément de compensation (4) est attaché à la poignée (5) de manière à ce que l'alliage présentant un coefficient de dilatation thermique plus faible se trouve sur le côté de la partie rotative (1) du disque de manivelle (2).

7. Mécanisme à manivelle pour un compteur de gaz selon l'une quelconque des revendications précédentes, **caractérisé en ce qu'**une extrémité du bras le plus court de la manivelle rigide (8) se termine par des profils de résistance (7), auxquels le bras déformable libre (6) de l'élément de compensation (4) est relié de manière coulissante.

8. Mécanisme à manivelle pour un compteur de gaz selon l'une quelconque des revendications précédentes, **caractérisé en ce que** sur le disque de manivelle (2) il y a une partie de résistance (10) située tangentiellement à l'élément de compensation (4), ce qui limite le mouvement de l'élément de compensation (4) pour des températures inférieures à la température de base.

9. Mécanisme à manivelle pour un compteur de gaz selon l'une quelconque des revendications précédentes, **caractérisé en ce que** l'élément de manivelle (3) directement relié à la manivelle rigide (8) se déplace tangentiellement à la rotation du disque de manivelle (2) et le sens de ce mouvement suit le sens de rotation du disque de manivelle (2) dans le cas de températures « T⁻ » inférieures à la température de base, et dans un sens opposé dans le cas de « T⁺ » supérieures à la température de base.
